# EUROPEAN PATENT APPLICATION

(11) **EP 4 162 998 A1**
(43) Date of publication of application: **12.04.2023**
(21) Application number: 22199737.2
(22) Date of filing: 05.10.2022
(51) Int. Cl.: B01D 1/00, B05B 1/00, F25B 39/00, F25B 39/02, B01D 1/14, B01D 3/34, B01D 3/42, B01L 9/00, F26B 21/00, F26B 21/14, F28F 3/02, G01N 1/40

(54) **EVAPORATOR**

(30) Priority: 08.10.2021 WO PCT/SE2021/050987
(71) Applicant: Biotage AB, 751 03 Uppsala (SE)
(72) Inventor: FRÖJDH, Håkan, 756 45 UPPSALA (SE)
(74) Representative: Brann AB

(57) **Abstract**

The invention is an evaporator comprising a plate holder arranged for rigidly holding a multiwell plate such that the horizontal upper surface thereof is vertically positioned at a desired level; at least one gas heating and injecting manifold arranged above the plate holder and having at least one injection nozzle positionable approximately at said desired level; each nozzle being adapted to inject inert drying gas into a corresponding well of the multiwell plate; and one or more heating elements arranged to warm the inert drying gas upstream of its injection into said wells; wherein at least one heating element is a heat sink integrated into said at least one manifolds.

The invention also includes a method of evaporating a solvent wherein inert gas which is pre-heated by aid of one or more heat sinks is used.

## Description

### Technical Field

The present invention relates to the area of evaporation, and more specifically to devices and methods for evaporation of liquids such as organic solvents.

### Background

Laboratory evaporators are devices capable of removing liquids, such as water or organic solvents, from preparations that need to be dry. Many industries use laboratory evaporators to prepare samples for analysis. The pharmaceutical, food, petroleum industries, and chemical laboratories all use evaporators for this reason.

Laboratory evaporators, such as benchtop evaporators, may use motion, gas, heat, or some combination to produce a dry sample ready for analysis. Specifically, in the sample preparation that commonly precedes analytical procedures, such as liquid chromatography, mass spectrometry etc, evaporator devices are commonly grouped as gas evaporators, such as nitrogen evaporators; vacuum evaporators; or rotary evaporators.

US 5,176,799 (Biotage AB) relates to an evaporation apparatus including a vessel defining an opening at the top thereof and forming an evaporation chamber to hold a liquid composition. A condenser assembly is disposed above and hermetically sealed to the vessel, having a wall defining a condensation chamber communicating with the evaporation chamber through the opening, an accumulator for receiving liquid condensed on the wall, and a drain for removing liquid received by the accumulator. A fluid drive is disposed above the condenser assembly and adapted to produce fluid flow downwardly through the condensation chamber and into contact with the liquid composition in the evaporation chamber and then upwardly into the condensation chamber. A heating mechanism for heating the liquid composition is arranged in the evaporation chamber so as to cause evaporation thereof; and a cooling means are arranged for cooling the wall so as to produce condensation thereon of vapor included in the fluid flowing upwardly from the evaporation chamber.

US 6,357,141 (Biotage AB) relates to an evaporating system for evaporating solvents from chemical samples held in supply plates, which accelerate evaporation by warming the samples in a hot air bath. The system includes adapters to allow the use of supply plates of varying heights, such as either standard micro-plates or deep well micro-plates. Specifically, an apparatus for evaporating solvents from chemical samples held in standard supply plates is described, wherein the supply plates are of the type having a horizontal upper surface, and a multitude of supply wells are arranged therein. The apparatus may comprise
a drying chamber for directing an inert drying gas at said chemical samples and comprising;
a first locator adapted for rigidly holding a first of said plates such that said horizontal upper surface of said first plate is vertically positioned at a desired level;
a first inert gas injecting manifold having a multitude of injection nozzles equal to said multitude of supply wells, wherein said multitude of nozzles is positionable approximately at said desired level, and at said multitude of supply wells in said first plate, one nozzle per corresponding well, and each of said nozzles is adapted to inject said inert drying gas into said corresponding well and at said corresponding chemical sample therein, whereby said drying gas evaporates said solvents from said corresponding chemical sample to form an inert gas and solvent gas mixture;
an exhauster for removing said inert gas and solvent gas mixture from said apparatus; and a warming chamber, atmospherically isolated for said drying chamber, and adapted to bathe said underside of said supply plates in hot air to accelerate said evaporation.

US 6,357,141 teaches that the described adapters which provides hot ait from underneath the plate bathe each well individually, while avoiding mixture with and dilution and/or contamination of the inert drying gas that contacts the samples.

Porvair Sciences markets the Ultravap^{®} range of blowdown evaporators designed to remove the traditional laboratory 'bottle neck' of solvent evaporation from microplates. Some instruments are designed with a flat front profile and platform shuttle enables interfacing with liquid-handling robots for automation efficiency. According to its supplier, these products provide reproducible sample throughput by recent advancements in gas injection technology to directly and consistently deliver heated gas in each well and tube. The gas is provided as a continuous flow warmed by inline heating.

Finally, WO 2017/186679 (Biotage AB) describes an evaporation apparatus for evaporation of a liquid in a test tube, which evaporation apparatus includes at least one manifold with at least one nozzle, and a tank unit for a liquid with an associated heater for the liquid. It is suggested that the apparatus may utilize preheated gas heated with other or additional heating means arranged downstream the inlet. WO 2017/186679 teaches that in conventional evaporator apparatuses, the gas flow from each nozzle is largely dependent on the pressure in the gas system between the pressure regulator and the nozzle. For low gas flow rates the gas pressure gives the desired flow through the nozzle. However, if the gas flow rate is high the flow resistance of the gas system will restrict the gas flow; this may be counteracted by an overpressure generated in the system. In prior-art systems the pressure were controlled by means of a manual pressure regulator, while WO 2017/186679 teaches a control unit configured to gradually increase the gas pressure from a first low pressure to a set pressure.

US 6,341,490 (Gilson, Inc.) relates to an apparatus for cooling or heating samples contained in the wells of well plates using a thermal transfer comb including numerous upwardly extending pins received in spaces around and between the sample containing wells of a well plate. The pins are arranged to correspond with the predetermined pattern of spaces around the wells of the well plate. A source for supplying or absorbing heat is in heat transfer proximity with the thermal transfer comb.

WO2008028999 relates to devices for processing biological samples, such as for amplifying DNA sequences by the Polymerase Chain Reaction ("PCR") method. Specifically, a device for thermal cycling of biological samples is described, which uses a heat sink comprising a base plate designed to fit in a good thermal contact against a planar thermoelectric element and a plurality of heat transfer elements projecting away from the base plate. The heat transfer elements are arranged in a non-parallel configuration with respect to each other for keeping the temperature of the base plate of the heat sink spatially uniform during thermal cycling.

In summary, there is an ongoing need in the field of evaporators for new solutions, which enable efficient evaporation using fast and easily operated evaporators having low energy consumption. Such evaporators are commonly used in laboratories, for example as benchtop equipment. For example, there is a need in this field of evaporators having more efficient heating resulting in lower energy consumption. Other needs are faster sample processing, and equipment better adapted to the limited space offered in most labs.

### Definitions

The term "a multiwell plate" is used herein for a plate of any size which includes a multitude of wells.

The term "heat sink" (also commonly spelled heatsink) is used herein for a passive heat exchanger that transfers the heat generated by an electronic or a mechanical device to a fluid medium, where it is dissipated away from the device, thereby allowing regulation of the device's temperature. As is well known, a heat sink comprises heat exchanging elements combined with a heat source of suitable dimensions.

The term 'open-loop' is used herein for a control system in which an input alters the output, but the output has no feedback loop and therefore no effect on the input. Open loop is used when maintaining tight temperature tolerance is not required and the operating environment is stable.

### Summary of the Invention

In a first aspect, the present invention relates to an evaporator comprising a plate holder arranged for rigidly holding a multiwell plate such that the horizontal upper surface thereof is vertically positioned at a desired level;
at least one gas heating and injecting manifold arranged above the plate holder and having at least one injection nozzle positionable approximately at said desired level; each nozzle being adapted to inject inert drying gas into a corresponding well of the multiwell plate; and one or more heating elements arranged to warm the inert drying gas upstream of its injection into said wells; wherein at least one heating element is a heat sink integrated into said at least one manifolds.

Thus, the present invention has found unexpected advantages of using an integrated heat sink in the manifold, which per definition is designed as a cooler most commonly seen in integrated circuits, as a heating element in laboratory evaporation, for example in benchtop equipment. The heat sink presents a maximized surface area in contact with the medium surrounding it, which in the present context contributes to a more efficient heating than the prior art evaporators use.

As the skilled person will appreciate, thanks to the integration of the heating element into the manifold, the space needed for the evaporator according to the invention is greatly reduced compared to an evaporator using a traditional in line heater. Also thanks to the integration, the total heated mass i.e. everything that needs to be warm to heat the gas to the required level, is reduced compared to the traditional solution with an inline heater. Due to the fact that the heat sink is so close to the nozzles, there will be a more predictable relationship between gas nozzle temperature and heat sink temperature.

The evaporator of the invention will also entail low heat losses and short heat up time to working temperature, since as compared to the prior art, the heated parts are kept to a minimum both in size and thermal mass.

Using the advantage of the heat sink, an even temperature of the heated gas can be obtained. The temperature of the heat sink(s) is advantageously maintained within a predetermined range or at a predetermined value by open loop control.

The skilled person can easily choose a suitable type and function for a given multiwell plate-based evaporator. For example, the heat sink may be a pin fin heat sink, commonly also denoted a "pin cooler". The pin fin heat sink may me straight or flared. The terms "pin fin heat sink" and "pin cooler" are used herein interchangeably.

Air velocity, choice of material, protrusion design and surface treatment are factors that affect the performance of a heat sink, and hence may impact the type selected. The heat sink may for example be made out of aluminium or copper.

In order to enable smooth and low energy operation, the heating element such as the heat sink(s) may be arranged for idle heat operation.

The evaporator according to the invention is advantageously a lab-type instrument, many of which are known and in common use. For example, the above-described US 6,357,141 may provide further guidance with regard to known and basic principles of evaporators which may also be applicable to the herein described device and method.

One advantage of the present invention is that the use of a heat sink enables the instrument to use a mathematical model that calculates the heater temperature needed to reach the requested (or desired) nozzle temperature, using the gas flow and the requested nozzle temperature as input. Thus, as discussed in more detail below in relation to the method of the invention, the heating element can heat up to the correct temperature without using any gas flow. As a consequence, the gas consumption may be reduced as compared to the prior art.

As appears from the above, the evaporator according to the invention will have the correct temperature from the beginning, when the gas flow is started.

If desired, the instrument may be maintained in a stand-by type of pre heat mode with low heat losses, so the user can start the evaporation immediately.

Multiwell plates are available in various sizes, having a large range of wells.

The evaporator of the invention may be arranged to be connected on-line with one or more analysis apparatuses downstream of it. Said analysis apparatus may be selected from the group consisting of gas chromatographs, liquid chromatographs, mass spectrometers and apparatuses for flow injection analysis.

The present invention is useful to reduce the volume of a solvent, either to a certain extent or to dry or close to dry. For example, an evaporator according to the invention may be used for the reconcentration of liquid samples.

Thus, another aspect of the invention is a method of evaporating a solvent using preheated inert gas, which method comprises
providing an evaporator comprising a plate holder; at least one gas injecting manifold arranged above the plate holder and having at least one injection nozzle; each nozzle being adapted to inject inert drying gas into a corresponding well of the multiwell plate; and at least one heat sink arranged to warm the inert drying gas upstream of its injection into said wells; and
starting the heat sink in advance of the flow of inert gas (known as idle heat operation); warm the heat sink up to the required temperature based on the requested flow and nozzle temperature to make the instrument ready for immediate use (using pre-heated equipment); or start the heat at the same time as the gas flow is enabled (immediate start operation).

Thus, the present method avoids the disadvantage of the prior art, where during the start of the process, the inert gas flow first needs to heat up the manifold, tubing and adapter plate and then gradually starts to get the correct temperature of the gas from the nozzle. As a consequence, the present invention provides for fast heat up time from a cold system to working temp, resulting in a faster evaporation than the prior art. Another advantage with the method is that the required volume of gas can be reduced, since the gas flow provides for efficient evaporation immediately.

The inert gas may be any gas that does not undergo chemical reactions under a set of given conditions, such as nitrogen gas, or any other gas which is inert in respect of the solvent to be evaporated.

The evaporator provided in the present method may be any embodiment of the herein presented evaporator according to the invention.

### Brief description of the drawings

Figure 1 is an example of an evaporator according to the invention, illustrating how a heating element has been integrated in the manifold.
Figure 2 shows the manifold of Figure 1 in cross section, together with a base element arranged for receiving a multiwell plate.

### Detailed description of the invention

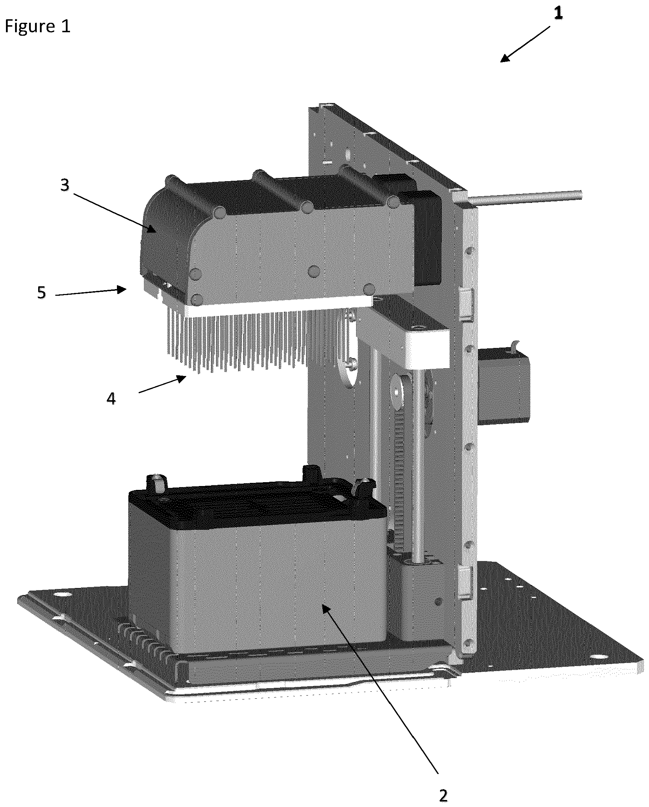

As appears from the above, turning to Figure 1, the present invention relates to an evaporator 1 comprising a plate holder 2. The plate holder 2 is arranged for holding a plate which includes wells or cavities, such as a multiwell plate, such that the horizontal upper surface thereof is vertically positioned at a desired level. In this context, as the skilled person will appreciate, the desired level will be a level each well or cavity is positioned to meet a nozzle which during evaporation provides a flow of inert gas into said well or cavity. As is well known, such an inert drying gas may be arranged to be injected into the well or cavity at any suitable angle, depending on known variables such as the desired degree of evaporation required, the nature of the solvent which is to be evaporated, the speed and efficiency of the process etc. Other modes of gas flow are possible, as provided by angled and/or otherwise offset nozzles. Advantageously, the nozzle directs the gas flow at an angle which provides for turbulent flow in said well or cavity.

Further, at least one gas heating and injecting manifold 3 is arranged above the plate holder 2 and having at least one injection nozzle 4 positionable approximately at said desired level. As the skilled person will appreciate, most evaporation processes will be performed with a plurality of nozzles 4, advantageously the same number of nozzles at there are wells in the microwell plate. Thus, each nozzle 4 is adapted to inject inert drying gas into a corresponding well of the multiwell plate.

In order to improve the evaporation process, the inert drying gas is warmed before being injected from a nozzle into a corresponding well. This is obtained according to the invention by one or more heating elements 5 arranged to warm the inert drying gas upstream of its injection into said wells. More specifically, according to the invention, in the manifold 3 said at least one heating element is a heat sink 6 which has been integrated into said at least one manifolds 3.

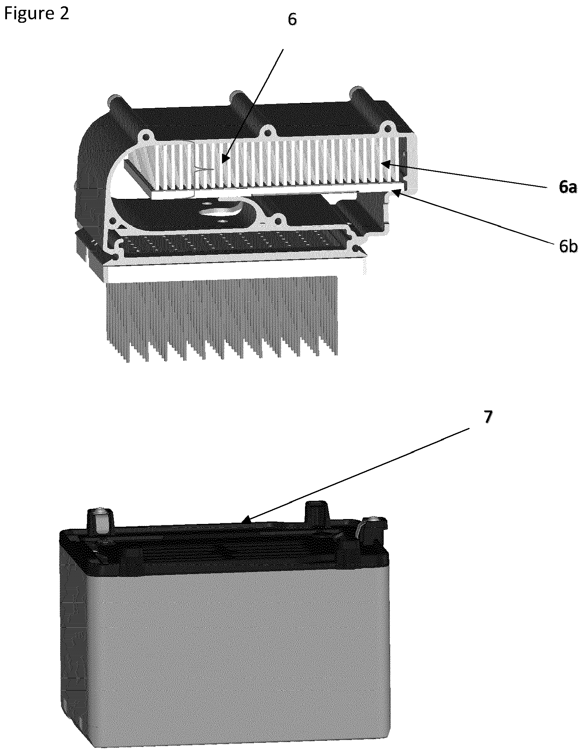

Turning to Figure 2, the heat sink 6 integrated in the manifold 3 appears clearly as a cross section. The heat sink is advantageously a pin fin cooler, such as a straight or a flared pin fin cooler. Pin fin coolers suitable for use according to the present invention are easily available from commercial sources.

Further in Figure 2, the place where a multiwell plate (7) is arranged appears clearly.

## Claims

1. An evaporator (1) comprising a plate holder (2) arranged for rigidly holding a multiwell plate such that the horizontal upper surface thereof is vertically positioned at a desired level;
at least one gas heating and injecting manifold (3) arranged above the plate holder (2) and having at least one injection nozzle (4) positionable approximately at said desired level; each nozzle (4) being adapted to inject inert drying gas into a corresponding well of the multiwell plate; and
one or more heating elements (6) are arranged to warm the inert drying gas upstream of its injection into said wells;
wherein at least one heating element is a heat sink (6) integrated into said at least one manifolds (3).

2. An evaporator according to claim 1, wherein the temperature of at least the heat sink is maintained within a predetermined range or at a predetermined temperature based on requested flow and nozzle temp without any feed-back from the actual nozzle temp using open loop control.

3. An evaporator according to claim 1 or 2, wherein the heat sink comprises a pin fin, which may be straight or flared.

4. An evaporator according to any one of the preceding claims, arranged in a system wherein it is connected on-line with one or more analysis apparatuses downstream thereof.

5. An evaporator according to claim 4, wherein said analysis apparatus is selected from the group consisting of gas chromatographs, liquid chromatographs, mass spectrometers and apparatuses for flow injection analysis.

6. A method of evaporating a solvent using pre-heated inert gas, which method comprises
providing an evaporator comprising a plate holder; at least one gas injecting manifold arranged above the plate holder and having at least one injection nozzle; each nozzle being adapted to inject inert drying gas into a corresponding well of the multiwell plate; and at least one heat sink which is arranged to warm the inert drying gas upstream of its injection into said wells and which is integrated into said at least one manifolds; and
either starting the heat sink in advance of the flow of inert gas; or warm the heat sink to the required temperature based on the requested flow and nozzle temperature to make the instrument ready for immediate use; or start the heat at the same time as the gas flow is enabled.

7. A method according to claim 6, wherein the evaporator is connected on-line to one or more analysis apparatuses downstream thereof.

8. A method according to any one of claims 6 or 7, wherein the inert gas is nitrogen gas.

9. A method according to any one of claims 6-8, which uses an evaporator according to any one of claims 1-5 is provided.

10. Use of a heat sink for the preheating of gas in an evaporator, such as a benchtop evaporator.

11. Use of an evaporator according to one of Claims 1-5, or a method according to any one of claims 6-10, for solvent exchange of liquid samples or for the drying of an analyte.
